# EUROPEAN PATENT APPLICATION

(11) **EP 1 079 126 A1**
(43) Date of publication of application: **28.02.2001**
(21) Application number: 00118470.4
(22) Date of filing: 25.08.2000
(51) Int. Cl.: F16D 1/033

(54) **Shaftless rotary structure**

(30) Priority: 25.08.1999 JP 23796999
(71) Applicant: NISSUI KAKO CO., LTD., Kawaguchi-shi, Saitama (JP)
(72) Inventor: Nakagomi, Shoji, Nissui Kako Co., Ltd., Kawaguchi-shi, Saitama (JP)
(74) Representative: Riederer Freiherr von Paar zu Schönau, Anton

(57) **Abstract**

A shaftless rotary structure includes: end rotary members (2, 3) that are located at both right and left ends and rotate while subjected to a drive force; at least one of intermediate rotary members (4 - 8) interposed between the right and left end rotary members; and a coupling rod (9) extending to the end rotary members while passing through an interior (4b, 5a, 6b, 7a, 8b) of the intermediate rotary members. The right and left end rotary members and the intermediate rotary members, or the intermediate rotary members are coupled with each other by detachable joint means (13). The end rotary members are coupled with each other through the right and left ends of the coupling rod so that the end rotary members and the intermediate rotary members are rotationally locked together.

## Description

### BACKGROUND OF THE INVENTION

### 1. Field of the Invention

The present invention relates to a shaftless rotary structure for fixing a rotary member such as a gear or a rotary blade in a shaftless manner.

### 2. Description of the Related Art

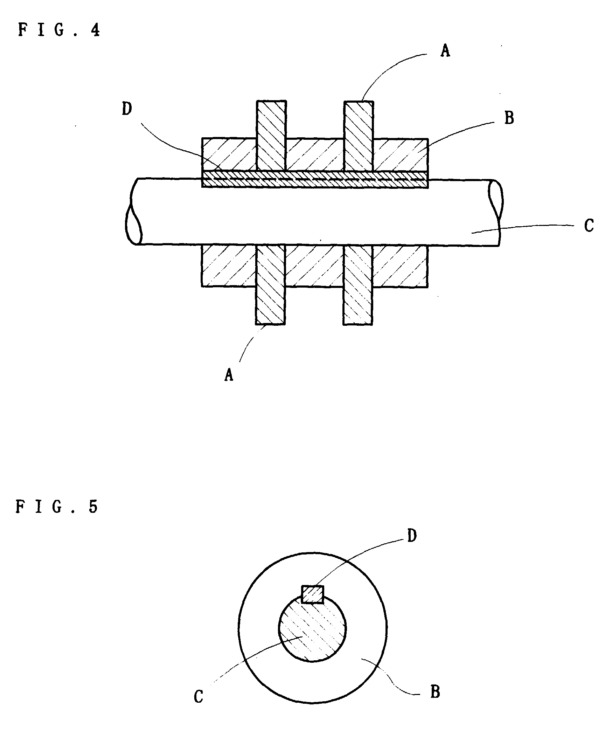

For example, in general, a rotary member such as a gear, a pulley or a rotary blade is fixed around a circumference of a rotary shaft and subjected to a rotational torque. A shaft structure such as a key, a spline or a serration is known as a fixing means. A structure using a key is shown in Figs. 4 and 5 in which a boss member B having a gear or a rotary blade A is fitted around a circumferential surface of a rotary shaft C and these components are fixed to each other in an integral manner by a key D inserted between the rotary shaft C and the boss member B. The spline structure is that an axial groove and an elongate projection are formed between the rotary shaft and the boss member fixed to the circumferential surface of the rotary shaft and the engagement of these components allows the boss member to be mounted on the rotary shaft. The boss member is slidable in the axial direction. This structure is applied to a gear type transmission or the like. On the other hand, the serration structure is that the boss member is fixed to a spline shaft so that the boss member is not slidable. This structure is applied to the transmission for a larger torque.

In those conventional rotary structures, the boss member having a mechanical element is mounted on the circumferential surface of the rotary shaft so that the rotary shaft is subjected to the torque that in turn is transmitted to the boss member through the rotary shaft. Accordingly it is necessary to use a shaft having a large diameter to some extent. As a result, the shaft diameter of the boss member is increased. This causes a problem in that the structure around the shaft becomes large in size. Also, there is a fear that the cross-sectional area of the shaft is decreased due to the provision of the key groove or spline groove in the shaft surface so that rigidity would be degraded or stress concentration would be induced. Furthermore, with the fixing structure by the key or the serration, it is difficult to exchange the boss members or the rotary members.

### SUMMARY OF THE INVENTION

An object of the present invention is to overcome these conventional problems of the rotary structure. More specifically, an object of the invention is to provide a shaftless rotary structure in which a plurality of structural members including a rotary member are formed into one piece by a detachable coupling means to ensure sufficient rigidity for the rotational stress without using a shaft as a torque transmission member and to readily perform the exchange work of components, in particular the rotary members.

In order to attain the above-noted object, according to the present invention, there is provided a shaftless rotary structure comprising: end rotary members that are located at both right and left ends and rotate while subjected to a drive force; at least one intermediate rotary member interposed between the right and left end rotary members; and a coupling rod extending to the end rotary members while passing through an interior of the intermediate rotary members. Then, the right and left end rotary members and the one or more intermediate rotary members, and/or the intermediate rotary members among themselves are coupled with each other by detachable joint means, and on the other hand, the end rotary members are coupled with each other by the right and left ends of the coupling rod so that the end rotary members and the intermediate rotary members are rotationally locked together.

The rotary structure according to the present invention is different from the conventional one in a rotational torque transmission structure. Namely, the right and left end rotary members are supported by bearings or members supported by the bearings so that the rotational torque is transmitted through the end rotary member to the intermediate rotary members. The intermediate rotary members include all the members that are mounted around the conventional rotary shaft drivingly rotated, such as a rotary blade, a gear or the like. A single or a plurality of intermediate rotary members may be used.

As described above, the conventional rotary structure is that the gear or the rotary blade is caused to pass through the shaft through a boss member, and the shaft is supported to the bearing to transmit the rotational torque. The rotary structure according to the present invention is that the end rotary members and the intermediate rotary members are coupled into one piece to form a rod-like rotary structure so that the end rotary members located in both ends are supported to the bearing to transmit the rotational torque. Since the coupling rod located along the rotary axis is a member for coupling the end rotary members and the intermediate rotary members with each other rather than a member that directly receives the rotational torque through the bearings, it is unnecessary to increase the diameter of the shaft to the level of the conventional shaft. It is possible to use a stud bolt or the like that is available on the market. Thus, the axial structure may be downsized and also the weight may be reduced.

According to the present invention, the end rotary members and the intermediate rotary members for constituting the rotary structure, or the intermediate rotary members are coupled with each other preferably by the pin insertion coupling or the concave/convex engagement of the bonding surfaces. Of course, any kind of coupling means may be used if it may couple the respective components with each other in a detachable manner.

Also, for example, the coupling rod is threadedly engaged with at least one of the end rotary members and fastened or the nut that is mounted on the tip end of the coupling rod is fastened so that the right and left end rotary members and the intermediate rotary members may be detachably coupled with each other in the one-piece manner.

With such a joint structure, the intermediate rotary members are clamped and fixed by the end rotary members so that the interfaces between the end rotary members and the intermediate rotary members and between the intermediate members may be fixed to each other without any motion about the axis by the pins or the fittings, thereby provide the rod-like rotary structure in which the end rotary members and the intermediate rotary members are coupled with each other in one piece. This rotary structure has sufficient rigidity to the rotational torque since the end rotary members and the intermediate rotary members are coupled integrally with each other through the pins or the like.

If the screw of the coupling rod is loosened, the end rotary members may be removed away from the coupling rod and the engagement among the intermediate rotary members may also be released. Thus, it is possible to remove any desired component and to readily perform the exchange of the respective components.

Incidentally in the case where pins are used, the number or the shape of the pins is not limited. It is sufficient to use the round pins or the different shaped pins suitably in conformity with the shape of the components, and to use the suitable number of pins symmetrically with respect to the axis of the components. In the case where the fitting of the bonding surfaces with each other is used instead of the pins, the concave/convex portions that are engaged with each other are provided in the bonding surfaces of the end rotary members and the intermediate rotary members or the bonding surfaces of the intermediate rotary members and the components are fitted coaxially with each other to form an integral structure.

Since the rotary shaft is subjected to a rotational torque about the axis, the pins are provided in the direction perpendicular to the rotational torque (i.e., in the axial direction), or in case of fitting, the convex/concave portions are provided in the radial direction of the bonding surfaces.

The intermediate rotary members include various kinds of rotary members such as the rotary blades as described above. Accordingly in the case where the intermediate rotary members are composed of a plurality of kinds of members, it is possible to use in combination different kinds of rotary members. For example, in the case where the rotary structure according to the present invention is applied to cutter units made of synthetic resin, a plurality of pulverizing blades and a plurality of rotary cutters are alternatively arranged. It is possible to couple members with each other that have different blade sizes or shapes or contours as the intermediate rotary members.

### BRIEF DESCRIPTION OF THE DRAWINGS

In the accompanying drawings:
Fig. 1 is a cross-sectional view of a shaftless rotary structure in accordance with a first embodiment of the present invention;
Fig. 2 is a cross-sectional view taken along the line II-II of Fig. 1;
Fig. 3 is a cross-sectional view showing a shaftless rotary structure in accordance with an another embodiment of the present invention;
Fig. 4 is a cross-sectional view showing one example of a conventional rotary structure; and
Fig. 5 is a radial sectional view of Fig. 4.

### DESCRIPTION OF THE PREFERRED EMBODIMENTS

Embodiments of the present invention will now be described with reference to the accompanying drawings.

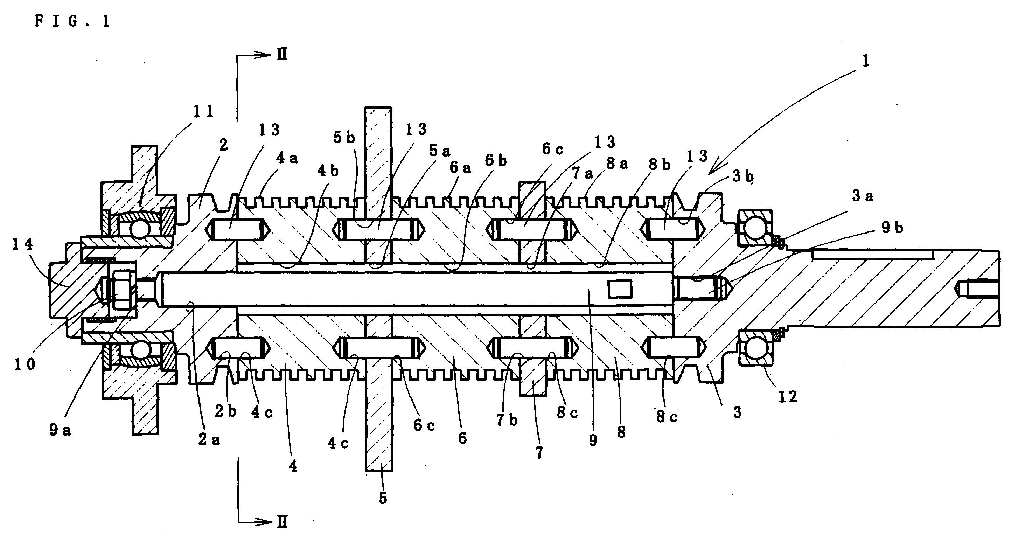

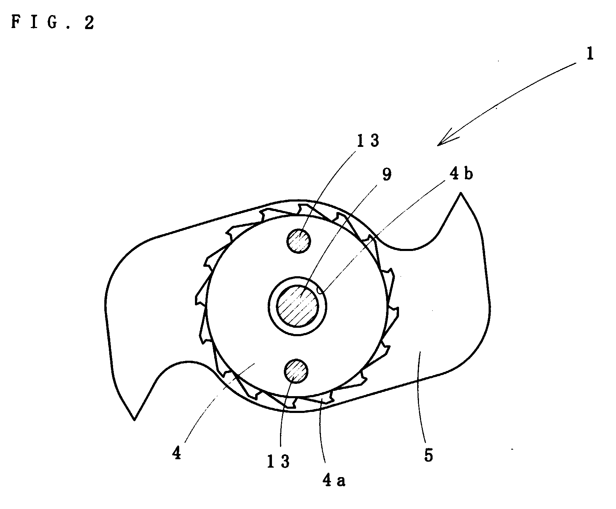

Fig. 1 is an axial sectional view of a shaftless rotary structure that is applied to a rotary cutter of a plastic runner pulverizer and Fig. 2 is a radial sectional view thereof.

As shown in Fig. 1, the shaftless rotary structure, generally designated by reference numeral 1, for constituting the rotary cutter is provided with end rotary members 2 and 3 located at both right and left ends, first through fifth five intermediate rotary members 4 to 8 interposed between the end rotary members 2 and 3, and a coupling rod 9 connected to the end rotary members 2 and 3 at both ends through centers of all the intermediate rotary members 4 to 8. Then, the end rotary members 2 and 3 and all the intermediate rotary members 4 to 8 are coupled integrally with each other by the coupling rod 9 and a joint means to be described later, to thereby form a shaft-like member as a whole.

Reference character 2a designates a through hole extending through the center of the left end rotary member 2. A head portion of the coupling rod 9 is inserted into the through hole 2a. A coupling portion 9a of the coupling rod 9, projecting from the outer end face of the left end rotary member 2, is fastened and fixed by a nut 10.

Reference character 3a designates a female screw hole formed about the center of the inner end face of the other end rotary member 3 (on the right side in the drawing). A male screw portion 9b formed at the tip end of the coupling rod 9 is threadedly engaged with the male screw.

Reference numerals 11 and 12 designate bearings fitted on the exterior of the terminal or end rotary members 2 and 3, respectively.

The first, third and fifth intermediate rotary members 4, 6 and 8 are each composed of a substantially sleeve-like thick blade having crest-shaped pulverizing blades 4a, 6a and 8a on the outer circumferential surface and are made in the same size. The outer end faces of the first and fifth intermediate rotary members 4 and 8 have the same diameter as that of the inner end faces of the confronting end rotary members 2 and 3 and have a smooth finish so as to come into intimate contact with and just fit to the outer end faces. As shown in Fig. 2, the pulverizing blades 4a, 6a and 8a are formed to project in radial direction at equal axial intervals and to be continuous in the circumferential direction on the outer circumferential surfaces of the intermediate rotary members 4, 6 and 8. The intermediate rotary members 4, 6 and 8 made of these rotary blades have, in the central portion, insertion holes 4b, 6b and 8b having a diameter larger than an outer diameter of the coupling rod 9.

The second and fourth intermediate rotary members 5 and 7 are made of thick plate-like large size rotary blades unlike the first, third and fifth intermediate rotary members 4, 6 and 8. As shown in Fig. 2, each of these rotary blades 5 and 7 has a pair of blade tips extending to be largely curved in a symmetrical manner with respect to the axis and has a center hole 5a, 7a having the same diameter as the above-described insertion hole. The second and fourth intermediate rotary members 5 and 7 are formed so that the fourth intermediate member 7 is smaller than the second intermediate member 5.

The end faces or plate faces of the respective intermediate rotary members 4 to 8 are surface-finished so as to be in intimate contact with each other. Upper and lower elongate holes 2b, 3b, 4c, 6c and 8c extending in the axial direction for pin insertion are formed at two positions in each bonding surface of the left and right end rotary members 2 and 3 and the first, third and fifth intermediate rotary members (sleeve-like pulverizing rotary blades) 4, 6 and 8. Upper and lower through holes 5b and 7b for pin insertion are formed at two positions in the plate faces of the second and fourth intermediate members (plate-like large size rotary blades) 5 and 7 in the same manner. Then, these elongate holes and through holes of the respective bonding surfaces of the end rotary members 2 and 3 and the intermediate rotary members 4 to 8 are provided at such positions that the surfaces to be bonded to each other are identified and keep the communication condition.

Accordingly the end rotary members 2 and 3 and the intermediate rotary members 4 to 8 are coupled with each other by inserting pins 13 into the communicated elongate holes 2b and 4c, 4c, 5b and 6c, 6c, 7b and 8c, 8c and 3b, respectively to thereby form a one-piece joint. Since the pins 13 are arranged at two positions in a symmetrical manner with respect to the axis in each bonding surface, the movement around the individual axis of each member is locked by the pins 13.

The coupling rod 9 is loosely inserted into the through holes 4b, 6b and 8b and the central holes 5a and 7a located at the axis of each rotary blade, which are the intermediate rotary members 4 to 8. The nut 10 of the coupling rod head portion 9a is fastened so that the end rotary members 2 and 3 fixed to both ends of the coupling rod 9 fasten the intermediate rotary members 4 to 8. As a result, the end rotary members 2 and 3 and the intermediate rotary members 4 to 8 are coupled with each other in one piece to form a rod-like rotary cutter.

Incidentally reference numeral 14 in the drawing denotes a cap for protecting the nut 10 threadedly engaged with the coupling rod 9.

When the end rotary member 2 is subjected to a rotary torque through the bearing 11, the end rotary members 2 and 3 and the intermediate rotary members 4 to 8 rotate unitary in the one-piece manner so that the respective rotary cutters are caused to perform their cutting operation or pulverizing operation. Since the coupling rod 9 simply performs the functions of fastening and fixing the end rotary members 2 and 3 and the intermediate rotary members 4 to 8, there is no risk that the load to be imposed on the rotary blades in operation would be applied directly to the coupling rod 9.

Also, since the nut 10 is simply loosened to remove the end rotary member 2 so that the fixture of the end rotary members 2 and 3 and the intermediate rotary members 4 to 8 is released, the constituents may readily be dismounted without any extra force. Also in assembling work, the intermediate rotary members 4 to 8 and the end rotary members 2 and 3 with the intermediate rotary members 4 and 8 are simply coupled by pins, and in addition, the nut 10 of the coupling rod 9 is rotated in the fastening direction, so that the respective constituent components are intimately fixed to each other. For this reason, it is also possible to readily perform the exchange work of the rotary blades which are the intermediate rotary members 4 to 8 for a short period of time. The rotary blades may be exchanged in conformity with the object to be cut to thereby ensure the excellent pulverizing effect and cutting effect.

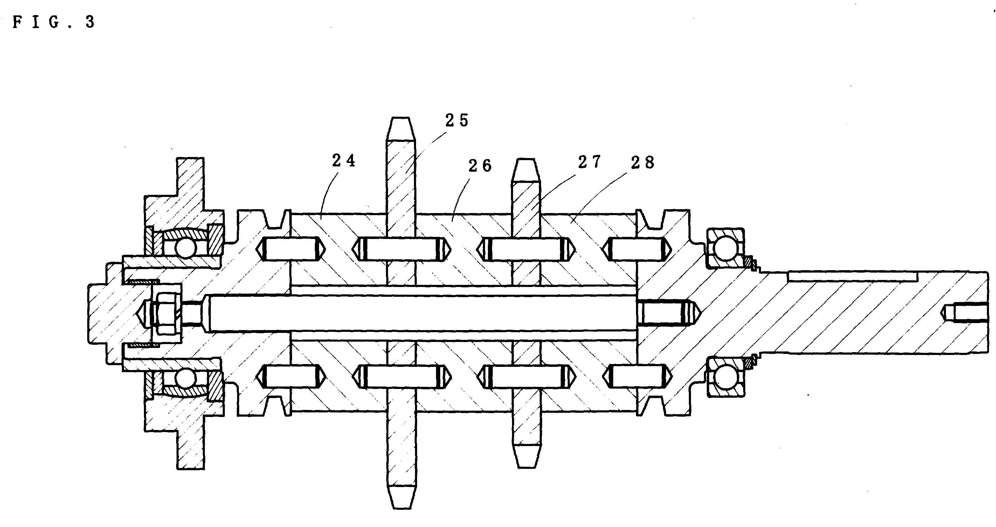

Fig. 3 shows a shaftless rotary structure in accordance with another embodiment of the present invention, in which the second and fourth intermediate members 25 and 27 out of the five intermediate rotary members 24 to 28 are formed of gears having a different diameter and a different tooth number. The rest of the intermediate rotary members 24, 26 and 28 is simply formed into a sleeve-like structure having no blade around the outer circumferential surface. The other structure is substantially the same as that of the embodiment shown in Figs. 1 and 2.

This shaftless rotary structure functions as a gear train mechanism for transmitting the drive force.

In the rotary structure according to the present invention, since it receives rotational torque through the end rotary member and the end rotary members and the intermediate rotary members are rotated in the one-piece manner, it is possible to impart sufficient rigidity also to a large rotational torque. On the other hand, since a large load is not applied directly to the coupling rod, it is not necessary to use a shaft having a large shaft diameter as in the conventional case, and it is possible to miniaturize the structure around the shaft.

Also, in the rotary structure according to the present invention, since the end rotary members and the intermediate rotary members are detachably fastened and fixed in place to thereby form the same structure as that of a rotary shaft, it is easy to assemble the individual components. And the end rotary member is removable so that the fixture of the end rotary members and the intermediate rotary members is released and the individual components may readily be removed. Thus, the maintenance of the structure is easy and the exchange of the individual components may readily be performed.

The rotary structure according to the present invention may be applied to a wide field. More specifically, for example, it may be applied preferably to a structure of an axial gear or an axial type rotary cutter. In particular, since in the rotary cutter having the rotary structure according to the present invention, it is possible to use in combination a plurality of rotary blades having different diameters and shapes, the plurality of rotary blades that have different shapes or sizes of the blade tips are used in combination to fit the object to be processed, to thereby ensure the excellent pulverizing and cutting effects. Also, in the axial gear, gears having different tooth grooves or outer diameters may be used and exchanged, whereby it is easy to obtain a transmission that has in itself the different transmission ratios.

## Claims

1. A shaftless rotary structure (1) comprising:
end rotary members (2, 3) that are located at both, the right and left ends of the rotary structure and rotate while subjected to a drive force;
at least one of intermediate rotary members (4 - 8; 24 - 28) interposed between the right and left end rotary members (2, 3); and
a coupling rod (9) extending between said end rotary members (2, 3) while passing through an interior (4b, 5a, 6b, 7a, 8b) of said intermediate rotary members (4 - 8; 24 - 28),
characterized in that said right and left end rotary members (2, 3) and said one or more intermediate rotary members (4 - 8; 24 - 28), and/or said intermediate rotary members (4 - 8; 24 - 28) are coupled with each other by detachable joint means (13), and said end rotary members (2, 3) are coupled with each other by the right and left ends of said coupling rod (9) so that said end rotary members (2, 3) and said intermediate rotary members (4 - 8; 24 - 28) are rotationally locked together.

2. The shaftless rotary structure according to claim 1, wherein said end rotary members (2, 3) are supported by bearings or are each coupled with a member supported by a bearing to be subjected to a rotational drive force.

3. The shaftless rotary structure according to claim 1 or 2, wherein said end rotary members (2, 3) and said intermediate rotary members (4 - 8; 24 - 28), or said intermediate members (4 - 8; 24 - 28) are detachably coupled by engagement of pins (13) or by a convex/concave fitting of bonding surfaces.

4. The shaftless rotary structure according to any of claims 1 to 3, wherein said intermediate rotary members (4 - 8) are rotary blades (4, 6, 8) having pulverizing teeth (4a, 6a, 8a) on the outer circumferential surface thereof.

5. The shaftless rotary structure according to any of claims 1 to 3, wherein said intermediate rotary members (4 - 8) are rotary cutter blades (5, 7) having blade tips on the outer circumferential surface thereof.

6. The shaftless rotary structure according to any of claims 1 to 3, wherein a part (5, 7) of said plurality of intermediate rotary members (4 - 8) is a rotary cutter blade having a blade tip on the outer circumferential surface thereof, and the other part (4, 6, 8) is a rotary blade provided with pulverizing blades (4a, 6a, 8a) on the outer circumferential surface thereof.

7. The shaftless rotary structure according to claim 5 or 6, wherein said rotary cutter blades (5, 7) of the intermediate rotary members (4 - 8) have different outer diameters and/or shapes.

8. The shaftless rotary structure according to any of claims 1 to 7, wherein at least part of said intermediate rotary members (24 - 28) are gears (25, 27).
